# EUROPEAN PATENT APPLICATION

(11) **EP 4 773 490 A1**
(43) Date of publication of application: **08.07.2026**
(21) Application number: 25225483.4
(22) Date of filing: 19.12.2025
(51) Int. Cl.: H02M 1/00, H02M 1/32, H02M 3/07, H02M 3/156, H02M 3/335, H03K 17/08

(54) **DIRECT-CURRENT TO DIRECT-CURRENT CONVERSION CIRCUIT**

(30) Priority: 24.12.2024 CN 202411929209
(71) Applicant: Shanghai Sigeyuan Intelligent Technology Co., Ltd, Shanghai 201306 (CN)
(72) Inventor: CHEN, Runtian, 201306 Shanghai (CN)
(74) Representative: Di Bernardo, Antonio

(57) **Abstract**

A DC-to-DC conversion circuit includes a bridge arm and an on-off module. The bridge arm is connected to a DC input terminal of the DC-to-DC conversion circuit and includes a first sub-bridge arm and a second sub-bridge arm. The first sub-bridge arm includes an active switch. The on-off module is connected in parallel with the first sub-bridge arm. The on-off module is turned on in response to a current of the DC-to-DC conversion circuit being greater than a target current threshold, to shunt a current through the first sub-bridge arm.

## Description

This application claims priority to Chinese Patent Applications No. 202411929209.6, filed on December 24, 2024.

### FIELD

The present disclosure relates to the field of electronic technologies, and in particular, to a direct-current to direct current (DC-to-DC) conversion circuit, a DC-to-DC conversion device, and a power supply device.

### BACKGROUND

In the field of modem energy conversion and storage, a DC-to-DC conversion device plays a crucial role, and is one of the core devices for achieving efficient energy utilization. The DC-to-DC conversion device can accurately perform voltage buck and boost conversion, to adapt a voltage to subsequent power transmission, storage, or utilization, thereby guaranteeing effective integration and efficient utilization of energy.

During practical application, the DC-to-DC conversion device may be subjected to a large current impact due to an operation such as a reverse connection or an incorrect connection, or an unexpected situation such as a lightning strike and a grid impact, which causes damage to a circuit component and significantly increases a safety risk.

### SUMMARY

The present disclosure aims to solve at least one of the technical problems existing in the conventional technology. To this end, the present disclosure provides a DC-to-DC conversion circuit, a DC-to-DC conversion device, and a power supply device, which can prevent the DC-to-DC conversion circuit from being subjected to a large current impact and improve safety.

In a first aspect, the present disclosure provides a DC-to-DC conversion circuit. The DC-to-DC conversion circuit includes: a bridge arm connected to a direct-current (DC) input terminal of the DC-to-DC conversion circuit and including a first sub-bridge arm and a second sub-bridge arm, where the first sub-bridge arm includes an active switch; and an on-off module connected in parallel with the first sub-bridge arm. The on-off module is turned on in response to a current of the DC-to-DC conversion circuit being greater than a target current threshold, to shunt a current through the first sub-bridge arm.

According to the DC-to-DC conversion circuit of the present disclosure, by connecting the on-off module in parallel with the first sub-bridge arm with the active switch, the on-off module is not turned on during a normal commutation process. When a potential overcurrent risk or an overcurrent occurs in the DC-to-DC conversion circuit, the on-off module is turned on to shunt the current through the first sub-bridge arm, which can prevent the DC-to-DC conversion circuit from being subjected to a large current impact and improve safety.

According to an embodiment of the present disclosure, the on-off module includes a unidirectional conduction device. A conduction direction of the unidirectional conduction device is opposite to a conduction direction of the active switch in the first sub-bridge arm when the active switch operates.

According to an embodiment of the present disclosure, the unidirectional conduction device is a diode.

According to an embodiment of the present disclosure, the on-off module includes a bidirectional switch device.

According to an embodiment of the present disclosure, the bidirectional switch device is a thyristor, an insulated gate bipolar transistor, a metal-oxide-semiconductor field-effect transistor, a high electron mobility transistor, a bipolar junction transistor, or a relay.

According to an embodiment of the present disclosure, the on-off module includes a shunt adjustment unit and an on-off unit that are connected in series. The shunt adjustment unit is configured to adjust a shunt ratio of the on-off module, and the on-off unit is configured to control on and off of the on-off module.

According to an embodiment of the present disclosure, the shunt adjustment unit includes at least one of an inductive component, a resistive component, and a capacitive component.

According to an embodiment of the present disclosure, the inductive component of the shunt adjustment unit is magnetically coupled to an inductive component in a circuit between the DC input terminal and the bridge arm.

According to an embodiment of the present disclosure, a terminal of the on-off module is connected to the first sub-bridge arm, and another terminal of the on-off module is connected between components in the circuit between the DC input terminal and the bridge arm.

According to an embodiment of the present disclosure, each of the components in the circuit between the DC input terminal and the bridge arm includes at least one of an inductive component, a resistive component, and a capacitive component.

According to an embodiment of the present disclosure, the on-off module is connected in parallel with the active switch of the first sub-bridge arm in a one-to-one correspondence.

According to an embodiment of the present disclosure, a plurality of active switches are connected in series to form a switch module, and the on-off module is connected in parallel with the switch module.

According to an embodiment of the present disclosure, the bridge arm has a flying capacitor three-level structure or a symmetric three-level structure.

According to an embodiment of the present disclosure, at least two bridge arms are cascaded, and the first sub-bridge arm of one of the at least two bridge arms close to the DC input terminal is connected in parallel with the on-off module.

According to an embodiment of the present disclosure, the first sub-bridge arm of one of the at least two bridge arms away from the DC input terminal is selectively connected in parallel with the on-off module.

According to an embodiment of the present disclosure, the second sub-bridge arm includes a passive switch.

According to an embodiment of the present disclosure, a steady-state current carrying capacity of the on-off module is greater than or equal to an operating current threshold of the active switch, and a transient surge withstand capability of the on-off module is greater than or equal to the operating current threshold of the active switch.

According to an embodiment of the present disclosure, in response to the current of the DC-to-DC conversion circuit being smaller than or equal to the target current threshold, the on-off module is turned off.

According to an embodiment of the present disclosure, the on-off module includes a self-triggering circuit. The self-triggering circuit is configured to detect the current of the DC-to-DC conversion circuit, trigger the on-off module to be turned on in response to the current of the DC-to-DC conversion circuit being greater than the target current threshold, and trigger the on-off module to be turned off in response to the current of the DC-to-DC conversion circuit being smaller than or equal to the target current threshold.

In a second aspect, the present disclosure provides a DC-to-DC conversion device. The DC-to-DC conversion device includes the DC-to-DC conversion circuit as described according to the above first aspect.

According to the DC-to-DC conversion device of the present disclosure, by connecting the on-off module in parallel with the first sub-bridge arm with the active switch, the on-off module is not turned on during the normal commutation process. When the potential overcurrent risk or the overcurrent occurs in the DC-to-DC conversion circuit, the on-off module is turned on to shunt the current through the first sub-bridge arm, which can prevent the DC-to-DC conversion circuit from being subjected to the large current impact and improve the safety.

According to an embodiment of the present disclosure, the DC-to-DC conversion device further includes a control unit and a current sampling unit disposed in the DC-to-DC conversion circuit. The control unit is connected to the current sampling unit and the on-off module of the DC-to-DC conversion circuit; and the control unit is configured to control, in response to the current of the DC-to-DC conversion circuit being greater than the target current threshold, the on-off module to be turned on to shunt a current through the first sub-bridge arm of the DC-to-DC conversion circuit.

According to an embodiment of the present disclosure, the DC-to-DC conversion device is an isolated device or a non-isolated device.

In a third aspect, the present disclosure provides a power supply device. The power supply device includes the DC-to-DC conversion circuit as described according to the above first aspect, or the DC-to-DC conversion device as described according to the above second aspect.

In a fourth aspect, the present disclosure provides a control method for the DC-to-DC conversion circuit as described according to the above first aspect. The control method for the DC-to-DC conversion circuit includes: obtaining an electrical fault parameter of the DC-to-DC conversion circuit, where the electrical fault parameter includes at least one of a current parameter and a voltage parameter, the current parameter including at least one of a current change rate and a current amplitude, and the voltage parameter including voltage polarity; and controlling the DC-to-DC conversion circuit to perform a protection action in response to the electrical fault parameter satisfying a protection condition.

According to an embodiment of the present disclosure, said controlling the DC-to-DC conversion circuit to perform the protection action includes: controlling the DC-to-DC conversion circuit to perform the protection action in response to the electrical fault parameter satisfying a predetermined fault protection condition.

According to an embodiment of the present disclosure, the electrical fault parameter includes the current amplitude; and said controlling the DC-to-DC conversion circuit to perform the protection action includes: controlling, based on a graded protection condition satisfied by the current amplitude, the DC-to-DC conversion circuit to perform a protection action corresponding to the graded protection condition.

According to an embodiment of the present disclosure, said controlling, based on the graded protection condition satisfied by the current amplitude, the DC-to-DC conversion circuit to perform the protection action corresponding to the graded protection condition includes: controlling the on-off module to be turned on according to a predetermined dynamic shunt ratio in response to the current amplitude being greater than a first current threshold, where the dynamic shunt ratio represents a proportion of a current shunted from the first sub-bridge arm; and controlling the on-off module to be turned off in response to the current amplitude being smaller than or equal to the first current threshold within a first predetermined time length; or controlling the on-off module to be turned on in response to the current amplitude being greater than a second current threshold; or controlling a fuse of the DC-to-DC conversion circuit to cut off the DC-to-DC conversion circuit in response to the current amplitude being greater than a third current threshold. The first current threshold is smaller than the second current threshold, and the second current threshold is smaller than the third current threshold.

According to an embodiment of the present disclosure, the method further includes, subsequent to said controlling the DC-to-DC conversion circuit to perform the protection action: controlling the on-off module to be turned off according to a predetermined current change rate in response to determining that the electrical fault parameter of the DC-to-DC conversion circuit in N sampling periods does not satisfy the protection condition, where N is a positive integer greater than 1.

According to an embodiment of the present disclosure, said determining that the electrical fault parameter of the DC-to-DC conversion circuit in the N sampling periods does not satisfy the protection condition includes: determining that the current parameter of the DC-to-DC conversion circuit in the N sampling periods does not satisfy a corresponding protection condition and that the voltage parameter in at least one of the N sampling periods does not satisfy a corresponding protection condition.

According to an embodiment of the present disclosure, the method further includes: obtaining a cumulative number of conduction cycles, a cumulative shunt current, and a temperature stress parameter of the on-off module; performing remaining life prediction based on the cumulative number of conduction cycles, the cumulative shunt current, and the temperature stress parameter, and determining an aging degree of the on-off module; and performing graded early warning based on the aging degree of the on-off module, and outputting early warning information corresponding to a current aging degree of the on-off module.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a schematic structural diagram of a DC-to-DC conversion circuit according to an embodiment of the present disclosure.
FIG. 2 is a schematic structural diagram of a DC-to-DC conversion circuit according to an embodiment of the present disclosure.
FIG. 3 is a schematic diagram showing a current flow direction of a DC-to-DC conversion circuit according to an embodiment of the present disclosure.
FIG. 4 is a schematic diagram showing a current flow direction of a DC-to-DC conversion circuit according to an embodiment of the present disclosure.
FIG. 5 is a schematic diagram showing a current flow direction of a DC-to-DC conversion circuit according to an embodiment of the present disclosure.
FIG. 6 is a schematic diagram showing a current flow direction of a DC-to-DC conversion circuit according to an embodiment of the present disclosure.
FIG. 7 is a schematic diagram showing a current flow direction of a DC-to-DC conversion circuit provided according to an embodiment of the present disclosure.
FIG. 8 is a schematic diagram showing a current flow direction of a DC-to-DC conversion circuit according to an embodiment of the present disclosure.
FIG. 9 is a schematic structural diagram of a DC-to-DC conversion circuit according to an embodiment of the present disclosure.
FIG. 10 is a schematic structural diagram of a DC-to-DC conversion circuit according to an embodiment of the present disclosure.
FIG. 11 is a schematic structural diagram of a DC-to-DC conversion circuit according to an embodiment of the present disclosure.
FIG. 12 is a schematic structural diagram of a DC-to-DC conversion circuit according to an embodiment of the present disclosure.
FIG. 13 is a schematic structural diagram of a DC-to-DC conversion circuit according to an embodiment of the present disclosure.
FIG. 14 is a schematic structural diagram of a DC-to-DC conversion circuit according to an embodiment of the present disclosure.
FIG. 15 is a schematic structural diagram of a DC-to-DC conversion circuit according to an embodiment of the present disclosure.
FIG. 16 is a schematic structural diagram of a DC-to-DC conversion circuit according to an embodiment of the present disclosure.
FIG. 17 is a schematic structural diagram of a DC-to-DC conversion circuit according to an embodiment of the present disclosure.
FIG. 18 is a schematic structural diagram of a DC-to-DC conversion device according to an embodiment of the present disclosure.
FIG. 19 is a schematic structural diagram of a DC-to-DC conversion device according to an embodiment of the present disclosure.
FIG. 20 is a schematic flowchart of a control method for a DC-to-DC conversion circuit according to an embodiment of the present disclosure.
FIG. 21 is a schematic flowchart of a control method for a DC-to-DC conversion circuit according to an embodiment of the present disclosure.

### Reference numerals:

on-off module 100, on-off unit 110, shunt adjustment unit 120, active switch 210, passive switch 220, control unit 300, absorption circuit 400.

### DETAILED DESCRIPTION

Technical solutions of embodiments of the present disclosure will be described clearly below in combination with accompanying drawings of the embodiments of the present disclosure. Obviously, the described embodiments are a part of the embodiments of the present disclosure, rather than all embodiments of the present disclosure. Based on the embodiments of the present disclosure, all other embodiments obtained by those skilled in the art shall fall within the scope of the present disclosure.

Terms such as "first" and "second" in the embodiments and claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or a plurality of first objects. In addition, "and/or" throughout the specification and claims indicates at least one of the objects associated with "and/or". The character "/" generally indicates that the associated objects before and after the character are in an "or" relationship.

In the field of modern energy conversion and storage, a DC-to-DC conversion device plays a crucial role, and is one of the core devices for achieving efficient energy utilization. The DC-to-DC conversion device can accurately perform voltage buck and boost conversion, to adapt a voltage to subsequent power transmission, storage, or utilization, thereby guaranteeing effective integration and efficient utilization of energy.

For example, a direct current generated by a photovoltaic module has characteristics such as a large voltage fluctuation range and unstable power. Through the DC-to-DC conversion device, buck and boost conversion can be accurately performed on the voltage, to adapt the voltage to the subsequent power transmission, storage, or utilization, thereby guaranteeing effective integration and utilization of photovoltaic power.

For another example, for an energy storage unit, whether in a charging process or a discharging process, the DC-to-DC conversion device can flexibly adjust the voltage and current to satisfy requirements of an energy storage system for different power and voltage levels, which ensures safe and stable operation of the energy storage unit and efficient storage and release of energy, and greatly improves reliability and flexibility of the entire energy system.

During practical application, due to an operation such as a reverse connection and an incorrect connection, or an unexpected situation such as a lightning strike and a grid impact, the DC-to-DC conversion device may be subjected to a large current impact, which causes damage to a circuit component and significantly increase a safety risk.

A DC-to-DC conversion circuit is provided according to an embodiment of the present disclosure. The DC-to-DC conversion circuit is applied to a DC-to-DC conversion device, and can prevent the DC-to-DC conversion circuit from being subjected to the large current impact, improving safety.

The DC-to-DC conversion circuit, the DC-to-DC conversion device, and a power supply device according to the embodiments of the present disclosure will be described below in detail through embodiments and application scenarios thereof in combination with the accompanying drawings.

It should be noted that the DC-to-DC conversion circuit according to the embodiments of the present disclosure may be applied to an isolated or non-isolated DC-to-DC conversion device. The isolated DC-to-DC conversion device may adopt a DC-to-DC conversion circuit with a buck topology, a boost topology, or a buck-boost topology. The DC-to-DC conversion circuit of the embodiments of the present disclosure is described below by taking the boost topology as an example.

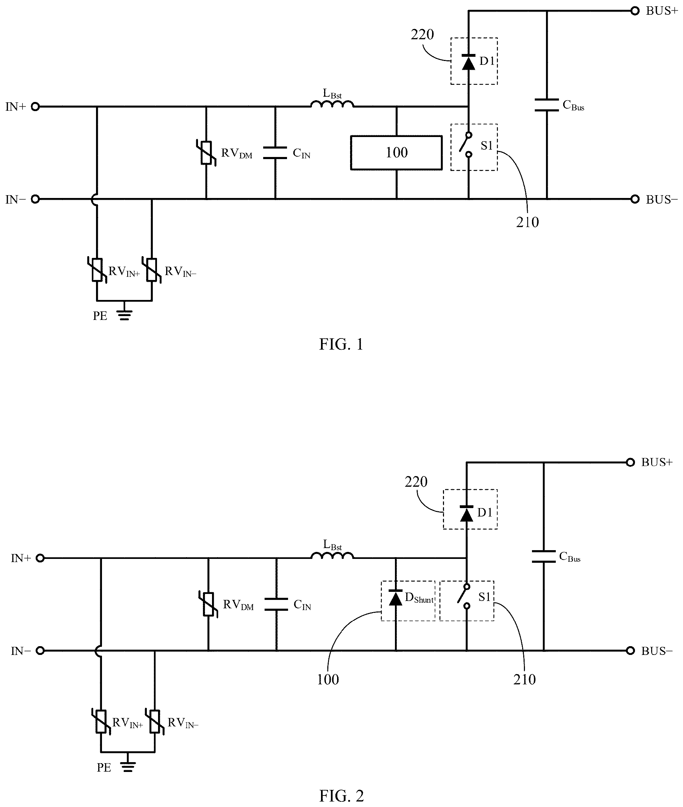

As shown in FIG. 1, the DC-to-DC conversion circuit according to an embodiment of the present disclosure includes a bridge arm and an on-off module 100.

In the DC-to-DC conversion circuit, through a switching action of the bridge arm, a magnitude and polarity of an input voltage may be changed, to provide a required output voltage, realizing the buck-boost conversion of voltage.

The bridge arm includes a first sub-bridge arm and a second sub-bridge arm, and the first sub-bridge arm includes an active switch 210.

During actual implementation, the active switch 210 may perform a switching operation according to an inputted control signal to realize on-off control of the first sub-bridge arm.

For example, the active switch 210 may be a metal-oxide-semiconductor field-effect transistor (MOSFET), a high electron mobility transistor (HEMT), or other switch devices that may perform the switching operation to realize the on-off control.

In this embodiment, the on-off module 100 is connected in parallel with the first sub-bridge arm. In response to a current of the DC-to-DC conversion circuit being greater than a target current threshold, the on-off module 100 is turned on to shunt a current through the first sub-bridge arm.

The target current threshold is a predetermined current threshold. The current of the DC-to-DC conversion circuit being greater than the target current threshold indicates a potential overcurrent risk in the DC-to-DC conversion circuit, or indicates that an overcurrent occurs in the DC-to-DC conversion circuit.

It should be noted that the on-off module 100 may control its on-off according to the inputted control signal. The on-off module 100 is connected in parallel with the first sub-bridge arm. When the current of the DC-to-DC conversion circuit is greater than the predetermined target current threshold, the on-off module 100 is turned on to shunt the current through the first sub-bridge arm, so as to reduce a current flowing through the first sub-bridge arm, preventing damage to a component such as the active switch 210 on the first sub-bridge arm, and improving safety of the DC-to-DC conversion circuit.

During the actual implementation, the current of the DC-to-DC conversion circuit is detected in real time. When the operation such as the reverse connection and the incorrect connection occurs in the DC-to-DC conversion circuit, or the unexpected situation such as the lightning strike and the grid impact occurs in an environment where the DC-to-DC conversion circuit is located, the current of the DC-to-DC conversion circuit is greater than the target current threshold, and the on-off module 100 is controlled to be turned on.

It can be understood that a current sampling unit may be arranged at different positions of the DC-to-DC conversion circuit for current sampling, and different positions may correspond to different target current thresholds.

It should be noted that in response to the current of the DC-to-DC conversion circuit being greater than the target current threshold, the on-off module 100 is turned on. During a normal commutation process of the bridge arm, the on-off module 100 is not turned on, such that a function of the first sub-bridge arm or the second sub-bridge arm is not affected, which can maintain a bridge arm characteristic of the DC-to-DC conversion circuit.

In the related art, a boost circuit has an upper bridge arm and a lower bridge arm. During a commutation process, a reverse current of a switching tube in the lower bridge arm, which acts according to the control signal, is relatively small or almost non-existent, and the switching tube of the lower bridge arm has a limited reverse conduction capability. Based on this, a protection device is generally not provided for the switching tube of the lower bridge arm.

The inventor found that during the practical application, due to the operation such as the reverse connection and the incorrect connection, or the unexpected situation such as the lightning strike and the grid impact, the DC-to-DC conversion device may be subjected to the large current impact, resulting in a current with a large amplitude flowing in a reverse direction through the switching tube of the lower bridge arm. The switching tube of the lower bridge arm with the limited reverse conduction capability may be damaged due to overcurrent, which significantly increases the safety risk.

In the embodiment of the present disclosure, the on-off module 100 is connected in parallel with the first sub-bridge arm with the active switch 210. The on-off module 100 may control its on-off according to the inputted control signal. When the current of the DC-to-DC conversion circuit is greater than the predetermined target current threshold, the on-off module 100 is turned on to shunt the current through the first sub-bridge arm, so as to reduce the current flowing through the first sub-bridge arm, preventing the damage to the component such as the active switch 210 on the first sub-bridge arm, and improving the safety of the DC-to-DC conversion circuit.

It should be noted that in the embodiments of the present disclosure, for a possible operation such as a reverse connection and an incorrect connection of the DC-to-DC conversion device and a possible unexpected situation such as a lightning strike and a grid impact in the environment where the DC-to-DC conversion device is located, the on-off module 100 is directly or indirectly connected in parallel with the first sub-bridge arm with the active switch 210. During the normal commutation process of the bridge arm, the on-off module 100 is not turned on, i.e., the on-off module 100 does not participate in the commutation process of the DC-to-DC conversion circuit. In response to the potential overcurrent risk in the DC-to-DC conversion circuit or the overcurrent occurring in the DC-to-DC conversion circuit, the on-off module 100 is turned on to shunt the current through the first sub-bridge arm. While satisfying conversion requirements of different types of DC-to-DC conversion circuits, through the shunting, the current flowing through the first sub-bridge arm is effectively reduced, to avoid the damage to the component on the first sub-bridge arm caused by overcurrent, and improve safety and reliability of the DC-to-DC conversion circuit.

During an actual implementation, the on-off unit 110 is arranged close to the active switch 210 of the first sub-bridge arm, such that the on-off unit 110 and the active switch 210 of the first sub-bridge arm may be integrated and packaged into a power module, which significantly improves an integration degree of the DC-to-DC conversion circuit. The position of the on-off unit 110 is adjustable and may also be set independently.

In some embodiments, the second sub-bridge arm may include a passive switch 220.

The passive switch 220 of the second sub-bridge arm may allow a current to flow in a single direction and block a reverse current.

For example, the passive switch 220 may be a switch device such as a diode that allows the current to flow in the single direction.

It should be noted that, in a direction where the current flow is unallowed, the passive switch 220 is equivalent to being in an off state. Through cooperation of the passive switch 220 of the second sub-bridge arm and the active switch 210 of the first sub-bridge arm, buck and boost conversion of the DC-to-DC conversion circuit is realized.

In this embodiment, some of the bridge arms (such as the second sub-bridge arm) of the DC-to-DC conversion circuit have no active switch 210, and the on-off module 100 is directly or indirectly connected in parallel with the bridge arm with the active switch 210 (the first sub-bridge arm). When the current of the DC-to-DC conversion circuit is greater than the predetermined target current threshold, the on-off module 100 is turned on to shunt the current through the first sub-bridge arm, which reduces the current flowing through the first sub-bridge arm, prevents the damage to the component such as the active switch 210 on the first sub-bridge arm, and improves the safety of the DC-to-DC conversion circuit.

For example, as shown in FIG. 1, the bridge arm of the DC-to-DC conversion circuit includes the first sub-bridge arm and the second sub-bridge arm. The first sub-bridge arm is provided with the active switch 210, which denoted by S1, and the second sub-bridge arm is provided the passive switch 220, which is denoted by D1, where D1 is a diode.

IN+ and IN- represent DC input terminals of the DC-to-DC conversion circuit, PE represents a ground terminal of the DC-to-DC conversion circuit, and BUS+ and BUS-represent DC output terminals of the DC-to-DC conversion circuit. RV_{IN+}, RV_{DM}, and RV_{IN-} are optional resistive components of the DC-to-DC conversion circuit, C_{IN} and C_{Bus} are optional capacitive components of the DC-to-DC conversion circuit, and L_{Bst} is an optional inductive component of the DC-to-DC conversion circuit.

It can be understood that the inductive component, the resistive component, the capacitive component, and the like in the DC-to-DC conversion circuit may be selected or adjusted according to a function to be realized by the DC-to-DC conversion circuit, which is not limited in the embodiments of the present disclosure.

In this embodiment, the first sub-bridge arm is provided with S1, and the second sub-bridge arm is provided with D1. D1 allows for the one-way current flow and cooperates with S1 to realize the buck-boost conversion of the DC-to-DC conversion circuit.

S1 is connected in parallel with the on-off module 100. When the current of the DC-to-DC conversion circuit is greater than the predetermined target current threshold, the on-off module 100 is turned on to shunt the current through the first sub-bridge arm, which reduces a current flowing through S1, prevents the damage to the component such as S1 on the first sub-bridge arm, and improves the safety of the DC-to-DC conversion circuit.

With the DC-to-DC conversion circuit according to the embodiments of the present disclosure, the on-off module 100 is connected in parallel with the first sub-bridge arm with the active switch 210. The on-off module 100 is not turned on during the normal commutation process. When the potential overcurrent risk or the overcurrent phenomenon occurs in the DC-to-DC conversion circuit, the on-off module 100 is turned on to shunt the current through the first sub-bridge arm, which can prevent the DC-to-DC conversion circuit from being subjected to the large current impact and improve the safety.

In an embodiment, in response to the current of the DC-to-DC conversion circuit being smaller than or equal to the target current threshold, the on-off module 100 is turned off.

In this embodiment, in response to the current of the DC-to-DC conversion circuit being smaller than or equal to the predetermined target current threshold, it indicates that the DC-to-DC conversion circuit operates normally. The on-off module 100 is turned off during normal operation and turned on when a fault occurs, which improves a shunting capability of the on-off module 100.

During the actual implementation, synchronous rectification is introduced into the on-off module 100. For example, a power transistor is used to replace the diode. The power transistor blocks a reverse current by using a body diode during normal operation and is turned on in case of a fault, to improve the shunting capability.

In an embodiment, the on-off module 100 is a unidirectional conduction device, and a conduction direction of the unidirectional conduction device is opposite to a conduction direction of the active switch 210 in the first sub-bridge arm when the active switch 210 operates.

It can be understood that the unidirectional conduction device refers to a component that allows a current to flow in a single direction in a circuit and blocks reverse flow of the current.

In this embodiment, the conduction direction of the active switch 210 in the first sub-bridge arm when the active switch 210 operates refers to a current direction of the first sub-bridge arm during the normal commutation process of the bridge arm, and may be called a forward direction. The active switch 210 has a certain conduction capability in the forward direction, but a limited conduction capability in the reverse direction.

The conduction direction of the unidirectional conduction device is opposite to the conduction direction of the active switch 210 in the first sub-bridge arm when the active switch 210 operates. When a current opposite to the current direction during the normal commutation process occurs in the first sub-bridge arm, the unidirectional conduction device is turned on, and the on-off module 100 shunts the current through the first sub-bridge arm, which prevents the active switch 210 in the first sub-bridge arm from being damaged by the impact of the reverse current.

In some embodiments, the unidirectional conduction device is a diode.

The diode is composed of a PN junction and has unidirectional conductivity. The diode conducts in the forward direction and cuts off in the reverse direction.

For example, as shown in FIG. 2, the on-off module 100 is a diode D_{Shunt} that is connected in parallel with S1. The conduction direction of S1 when S1 operates is opposite to a conduction direction of D_{Shunt}. D_{Shunt} provides reverse shunt support for S1, which can prevent the DC-to-DC conversion circuit from being subjected to the large current impact and improve the safety.

In an embodiment, the on-off module 100 is a bidirectional switch device.

The bidirectional switch device has a bidirectional conduction characteristic.

In this embodiment, the bidirectional switch device has a conduction direction opposite to the conduction direction of the active switch 210 in the first sub-bridge arm when the active switch 210 operates, and a conduction direction that is the same as the conduction direction of the active switch 210 in the first sub-bridge arm when the active switch 210 operates.

During the actual implementation, through the bidirectional switch device, shunting may be performed on bidirectional currents on the first sub-bridge arm, which is applicable to overcurrent phenomena in different directions and can effectively improve the safety of the DC-to-DC conversion circuit.

In an embodiments, the bidirectional switch device may be a thyristor, an insulated gate bipolar transistor (IGBT), a metal-oxide-semiconductor field-effect transistor (MOSFET), a high electron mobility transistor (HEMT), a bipolar junction transistor, or a relay.

The embodiments of the present disclosure are described below through several different implementations.

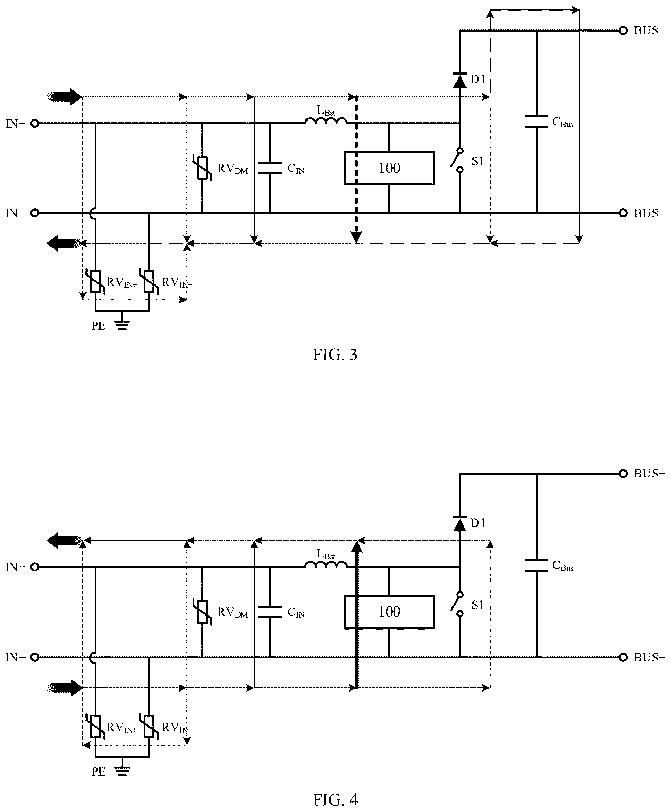

As shown in FIG. 3, a large current in a current direction from IN+ to IN- occurs in the DC-to-DC conversion circuit. The current passes through RV_{IN+}, RV_{DM}, RV_{IN-}, C_{IN}, L_{Bst}, D1, and C_{Bus} to form a passive loop. A current direction when S1 is turned on is from top to bottom. The on-off module 100 may be selected as the bidirectional switch device and is turned on to assist in shunting the current in the direction from top to bottom.

As shown in FIG. 4, a large current in a current direction from IN- to IN+ occurs in the DC-to-DC conversion circuit, i.e., the DC-to-DC conversion circuit is reversely connected. The current passes through RV_{IN+}, RV_{DM}, RV_{IN-}, and C_{IN} to form a passive loop. S1 has a limited reverse conduction capability from in a direction from bottom to top, so that a small part of the current passes through S1. The on-off module 100 may be selected as the unidirectional conduction device, and the conduction direction of the unidirectional conduction device is opposite to the forward conduction direction of S1 from top to bottom. A passive shunt loop is formed by the unidirectional conduction device to assist in shunting.

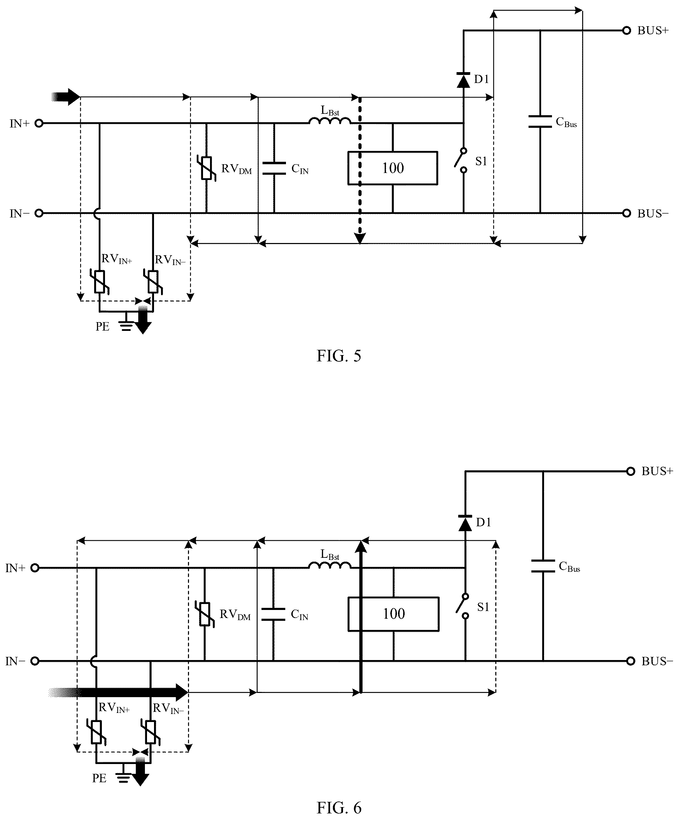

As shown in FIG. 5, a large current in a current direction from IN+ to PE occurs in the DC-to-DC conversion circuit. The current passes through RV_{IN+}, RV_{DM}, RV_{IN-}, C_{IN}, L_{Bst}, D1, and C_{Bus} to form a passive loop. The current direction when S1 is turned on is from top to bottom. The on-off module 100 may be selected as the bidirectional switch device, and is turned on to assist in shunting the current in the direction from top to bottom.

As shown in FIG. 6, a large current in a current direction from IN- to PE occurs in the DC-to-DC conversion circuit. The current passes through RV_{IN+}, RV_{DM}, RV_{IN-}, and C_{IN} to form a passive loop. A small part of the current passes through S1. The on-off module 100 may be selected as the unidirectional conduction device, and a passive shunt loop is formed by the unidirectional conduction device to assist in shunting.

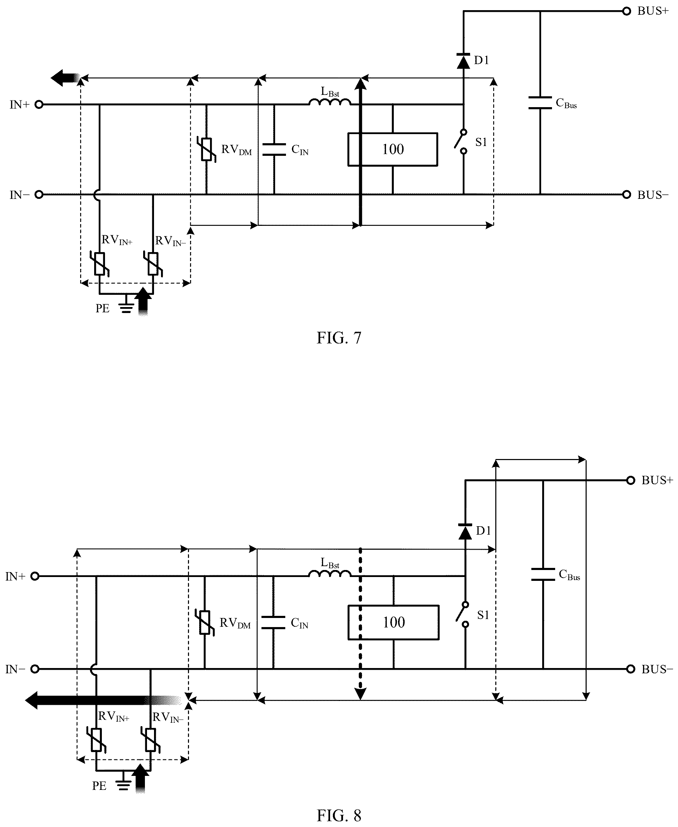

As shown in FIG. 7, a large current in a current direction from PE to IN+ occurs in the DC-to-DC conversion circuit. The current passes through RV_{IN+}, RV_{DM}, RV_{IN-}, and C_{IN} to form a passive loop. A small part of the current passes through S1. The on-off module 100 may be selected as the unidirectional conduction device, and a passive shunt loop is formed by the unidirectional conduction device to assist in shunting.

As shown in FIG. 8, a large current in a current direction from PE to IN- occurs in the DC-to-DC conversion circuit. The current passes through RV_{IN+}, RV_{DM}, RV_{IN-}, C_{IN}, L_{Bst}, D1, and C_{Bus} to form a passive loop. The current direction when S1 is turned on is from top to bottom. The on-off module 100 may be selected as a bidirectional switch device, and is turned on to assist in shunting the current in the direction from top to bottom.

The currents flowing through RV_{IN+}, RV_{DM}, and RV_{IN-} in FIG. 3 to FIG. 8 are indicated by dashed arrows, indicating that RV_{IN+}, RV_{DM}, and RV_{IN-} function in a case of a large current.

In an embodiment, the on-off module 100 includes a shunt adjustment unit 120 and an on-off unit 110 that are connected in series. The shunt adjustment unit 120 is configured to adjust a shunt ratio of the on-off module 100, and the on-off unit 110 is configured to control on and off of the on-off module 100.

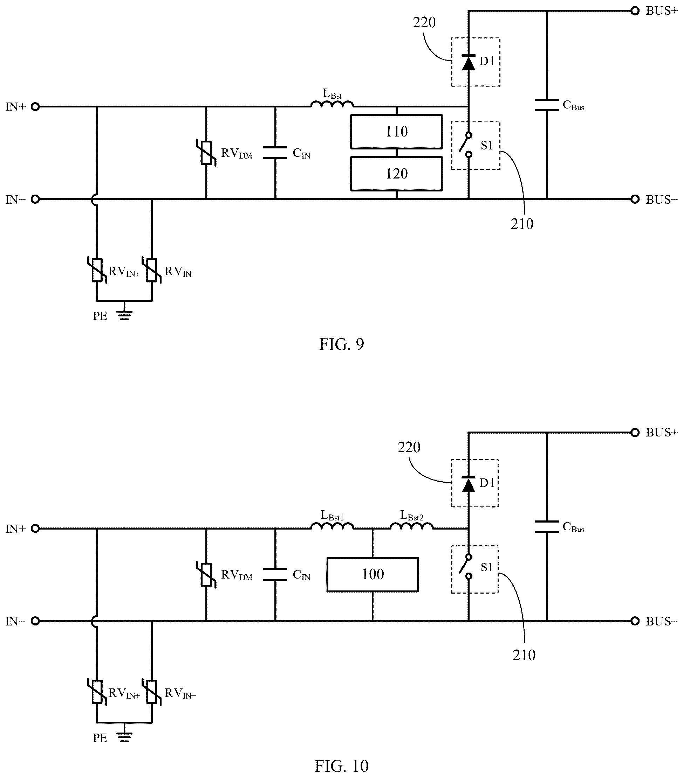

As shown in FIG. 9, the on-off module 100 is formed by the shunt adjustment unit 120 and the on-off unit 110 that are connected in series, and is connected in parallel with the active switch 210 of the first sub-bridge arm. In response to the current in the DC-to-DC conversion circuit being greater than the target current threshold, the on-off module 100 is turned on to perform shunting.

In this embodiment, the shunt adjustment unit 120 may adjust the proportion of the current shunted from the first sub-bridge arm by the on-off module 100. Different shunt adjustment units 120 may be selected according to the reverse conduction capability of the active switch 210 on the first sub-bridge arm, a potential overcurrent situation of the DC-to-DC conversion circuit, and the like. The on and off of the on-off module 100 is controlled by the on-off unit 110 to realize the shunting for the first sub-bridge arm.

During a practical implementation, the on-off unit 110 may be a bidirectional switch device or a unidirectional conduction device.

In an embodiment, the shunt adjustment unit 120 includes at least one of an inductive component, a resistive component, and a capacitive component.

In this embodiment, the shunt adjustment unit 120 may be an inductive component, a resistive component, a capacitive component, or a combination thereof, which allows the on-off module 100 to draw a current from the first sub-bridge arm in different proportions, effectively improving the safety of the DC-to-DC conversion circuit.

In an embodiment, a terminal of the on-off module 100 is connected to the first sub-bridge arm, and another terminal of the on-off module 100 is connected between components in a circuit between the DC input terminal and the bridge arm.

In this embodiment, a parallel loop of the on-off module 100 and the first sub-bridge arm includes, except for the on-off module 100 and the active switch 210 of the first sub-bridge arm, the component in the circuit between the DC input terminal and the bridge arm. Through the component in the circuit between the DC input terminal and the bridge arm, the proportion of the current shunted from the first sub-bridge arm by the on-off module 100 may be adjusted.

It can be understood that a component such as an inductive component, a resistive component, and a capacitive component may be provided in the circuit between the DC input terminal and the bridge arm.

In an embodiment, the component in the circuit between the DC input terminal and the bridge arm includes at least one of an inductive component, a resistive component, and a capacitive component.

For example, as shown in FIG. 10, a terminal of the on-off module 100 is connected to the first sub-bridge arm, and another terminal of the on-off module 100 is connected between inductive components in the circuit between the DC input terminal and the bridge arm.

In this embodiment, the inductive components L_{Bst1} and L_{Bst2} in the circuit between the DC input terminal and the bridge arm are formed by splitting an inductive element at a split point. The other terminal of the on-off module 100 is connected to the split point of the inductive element in the circuit between the DC input terminal and the bridge arm. Through the connection with the split point of the inductive element, the inductive component is added into the parallel loop of the on-off module 100 and the first sub-bridge arm, to adjust the proportion of the current shunted by the on-off module 100 from the first sub-bridge arm.

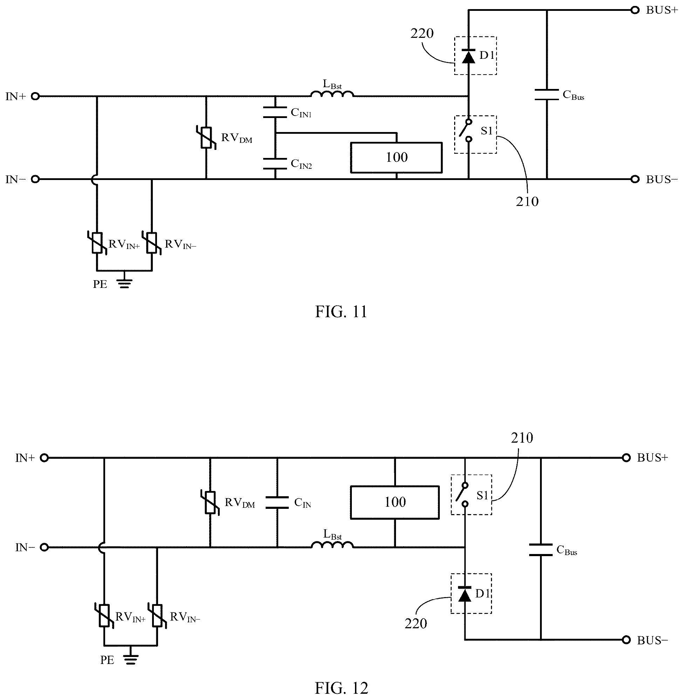

For another example, as shown in FIG. 11, a terminal of the on-off module 100 is connected to the first sub-bridge arm, and another terminal of the on-off module 100 is connected between capacitive components in the circuit between the DC input terminal and the bridge arm.

In this embodiment, the capacitive components C_{IN1} and C_{IN2} in the circuit between the DC input terminal and the bridge arm are formed by splitting a capacitive element at a split point. The other terminal of the on-off module 100 is connected to the split point of the capacitive element in the circuit between the DC input terminal and the bridge arm. Through the connection with the split point of the capacitive element, the capacitive component is added into the parallel loop of the on-off module 100 and the first sub-bridge arm, to adjust the proportion of the current shunted by the on-off module 100 from the first sub-bridge arm.

For another example, a terminal of the on-off module 100 is connected to the first sub-bridge arm, and another terminal of the on-off module 100 is connected between resistive components in the circuit between the DC input terminal and the bridge arm. The resistive component is added into the parallel loop of the on-off module 100 and the first sub-bridge arm. The resistive components in the circuit are formed by splitting a resistive element at a split point, and the other terminal of the on-off module 100 is connected to the split point of the resistive element.

For another example, a terminal of the on-off module 100 is connected to the first sub-bridge arm, and another terminal is connected between a capacitive component and an inductive component in the circuit between the DC input terminal and the bridge arm. The capacitive component or the inductive component is added into the parallel loop of the on-off module 100 and the first sub-bridge arm to adjust the proportion of the current shunted by the on-off module 100 from the first sub-bridge arm.

In an embodiment, the inductive component of the shunt adjustment unit 120 is magnetically coupled to the inductive component in the circuit between the DC input terminal and the bridge arm.

The magnetic coupling refers to a non-contact transmission manner based on magnetic field coupling. Two or more coils achieve energy or signal transmission by sharing one magnetic core or generating mutually coupled magnetic fields. When a coil is energized to generate a varying magnetic field, another coil induces an electromotive force due to a change in magnetic flux, thereby realizing transfer of electrical energy or a signal.

In this embodiment, the shunt adjustment unit 120 is connected in series with the on-off unit 110. The shunt adjustment unit 120 may be an inductive component, a resistive component, a capacitive component, or a combination thereof. The inductive component of the shunt adjustment unit 120 may be magnetically coupled to the inductive component in the circuit between the DC input terminal and the bridge arm, reducing a volume of a magnetic component in the circuit while improving a response speed.

In an embodiment, the on-off module 100 is connected in parallel with the active switch 210 of the first sub-bridge arm in a one-to-one correspondence.

In this embodiment, when the DC-to-DC conversion circuit has n active switches 210, the DC-to-DC conversion circuit may have n on-off modules 100. The n on-off modules 100 are connected in parallel with the n active switches 210 in a one-to-one correspondence. The on-off module 100 shunts a current through the corresponding active switch 210 connected in parallel with the on-off module 100 to protect the corresponding active switch 210.

In an embodiment, a plurality of active switches 210 are connected in series to form a switch module, and the on-off module 100 is connected in parallel with the switch module.

In this embodiment, the DC-to-DC conversion circuit may be provided with an on-off module 100. By connecting the on-off module 100 in parallel with the switch module, shunting is performed for the plurality of active switches 210, thereby protecting the switch module formed by the plurality of active switches 210 connected in series.

It should be noted that the on-off module 100 is connected in parallel with the active switch 210. As shown in FIG. 1, the on-off module 100 may be connected in parallel with the active switch 210 of the lower bridge arm (the first sub-bridge arm). As shown in FIG. 12, the on-off module 100 may be connected in parallel with an active switch 210 of the upper bridge arm (the first sub-bridge arm). FIG. 12 shows a dual structure of the circuit shown in FIG. 1.

During the practical implementation, the DC-to-DC conversion circuit according to the embodiments of the present disclosure may be a two-level circuit, a three-level circuit, or a multi-level circuit.

In some embodiments, the bridge arm may have a flying capacitor three-level structure, and the DC-to-DC conversion circuit is a three-level circuit.

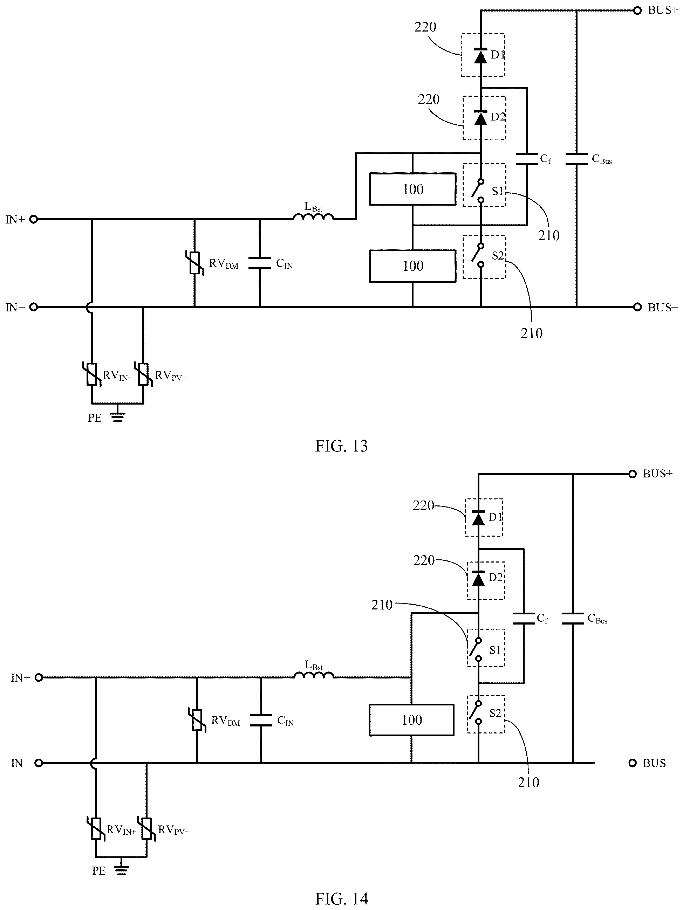

For example, as shown in FIG. 13, a terminal of a capacitor C_{f} is connected between S1 and S2, and another terminal of the capacitor C_{f} is connected between D1 and D2. A cross-connection of the capacitor C_{f} causes the bridge arm to form the flying capacitor three-level structure.

In an embodiment, for a bridge arm with the flying capacitor three-level structure, the on-off module 100 is connected in parallel with the active switch 210 of the first sub-bridge arm in a one-to-one correspondence.

For example, as shown in FIG. 13, for the bridge arm with the flying capacitor three-level structure, an on-off module 100 is connected in parallel with S1, and another on-off module 100 is connected in parallel with S2.

In an embodiment, for a bridge arm with the flying capacitor three-level structure, a plurality of active switches 210 are connected in series to form a switch module, and the on-off module 100 is connected in parallel with the switch module.

For example, as shown in FIG. 14, for the bridge arm with the flying capacitor three-level structure, S1 and S2 are connected in series to form a switch module, and the on-off module 100 is connected in parallel with the switch module.

In an embodiment, the bridge arm may have a symmetric three-level structure, and the DC-to-DC conversion circuit is a three-level circuit.

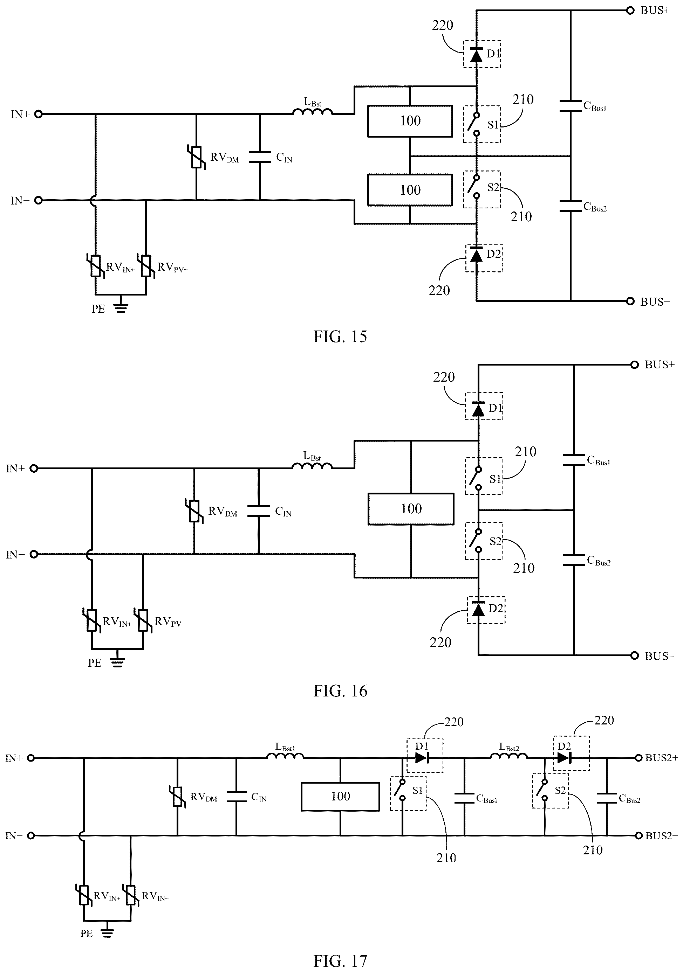

For example, as shown in FIG. 15, an upper part of the DC-to-DC conversion circuit is provided with two passive switches 220, which are denoted by D1 and D2, and a lower part of the DC-to-DC conversion circuit is provided with two active switches 210, which are denoted by S1 and S2, so that the bridge arm forms a symmetric three-level structure.

In an embodiment, for a bridge arm with the symmetric three-level structure, the on-off module 100 is connected in parallel with the active switch 210 of the first sub-bridge arm in a one-to-one correspondence.

For example, as shown in FIG. 15, for the bridge arm with the symmetric three-level structure, an on-off module 100 is connected in parallel with S1, and another on-off module 100 is connected in parallel with S2.

In an embodiment, for a bridge arm with the symmetric three-level structure, a plurality of active switches 210 are connected in series to form a switch module, and the on-off module 100 is connected in parallel with the switch module.

For example, as shown in FIG. 16, for the bridge arm with the symmetric three-level structure, S1 and S2 are connected in series to form the switch module, and the on-off module 100 is connected in parallel with the switch module.

In an embodiment, at least two bridge arms are cascaded, and the first sub-bridge arm of one of the at least two bridge arms close to the DC input terminal is connected in parallel with the on-off module 100.

In this embodiment, the DC-to-DC conversion circuit includes two or more bridge arms that are cascaded. The first sub-bridge arm of one of the at least two bridge arms close to the DC input terminal is connected in parallel with the on-off module 100. The current through the first sub-bridge arm is shunted by the on-off module 100.

As shown in FIG. 17, the DC-to-DC conversion circuit includes two bridge arms. A first bridge arm is provided with S1 and D1, and a second bridge arm is provided with S2 and D2. The first bridge arm is a bridge arm close to the DC input terminal, and S1 is connected in parallel with the on-off module 100.

It should be noted that in a cascaded structure, the bridge arm closer to the DC input terminal of the DC-to-DC conversion circuit is subject to a larger current. The first sub-bridge arm of one of the at least two bridge arms close to the DC input terminal is connected in parallel with the on-off module 100, such that shunting may be performed through the on-off module 100 when an overcurrent occurs, which improves the safety of the DC-to-DC conversion circuit.

In an embodiment, the first sub-bridge arm of one of the at least two bridge arms away from the DC input terminal may selectively connected in parallel with the on-off module 100.

In this embodiment, the first sub-bridge arm of the bridge arm away from the DC input terminal may be connected or may not be connected with the on-off module 100 in parallel.

For example, as shown in FIG. 17, the DC-to-DC conversion circuit includes two bridge arms, including a first bridge arm provided with S1 and D1, and a second bridge arm provided with S2 and D2. The first bridge arm is the bridge arm close to the DC input terminal, and S1 is connected in parallel with the on-off module 100. S2 may be connected in parallel with the on-off module 100 or may not be connected in parallel with the on-off module 100.

In this embodiment, the current on the first bridge arm is the largest, and the bridge arm further away from the DC input terminal is subject to a smaller current. The first sub-bridge arm of the bridge arm away from the DC input terminal may be selectively connected in parallel with the on-off module 100, which effectively improves the safety of the DC-to-DC conversion circuit while saving costs.

In an embodiment, a steady-state current carrying capacity of the on-off module 100 is greater than or equal to an operating current threshold of the active switch 210, and a transient surge withstand capability of the on-off module 100 is greater than or equal to the operating current threshold of the active switch 210.

The steady-state current carrying capacity refers to a maximum current that can be continuously and stably borne by a device under a predetermined environmental condition (such as a temperature and a humidity) and that would not cause a temperature of the device to exceed an allowable maximum operating temperature of the device. The transient surge withstand capability refers to a maximum transient overcurrent that can be borne by a device for a short period.

In this embodiment, each of the steady-state current carrying capacity and the transient surge withstand capability of the on-off module 100 is greater than or equal to the operating current threshold of the active switch 210, i.e., each of the steady-state current carrying capacity and the transient surge withstand capability of the on-off module 100 is greater than or equal to a switching tube limit parameter of the active switch 210 that is protected, to ensure that a shunt path is turned on preferentially under an abnormal operating condition, effectively reducing a risk of thermal failure or avalanche breakdown of the switching tube such as the active switch 210 caused by overcurrent.

It can be understood that on and off control of the on-off module 100 may be realized via the on-off module 100 executing a received control instruction.

In an embodiment, the on-off module 100 may further include a self-triggering circuit.

The self-triggering circuit is configured to detect the current of the DC-to-DC conversion circuit. In response to the current of the DC-to-DC conversion circuit being greater than the target current threshold, the on-off module 100 is triggered to be turned on. In response to the current of the DC-to-DC conversion circuit being smaller than or equal to the target current threshold, the on-off module 100 is triggered to be turned off.

A control instruction executed by the on-off module 100 may be transmitted by an external device such as a control unit 300, or may be implemented through the self-triggering circuit to achieve rapid response.

As an independent detection module of the DC-to-DC conversion circuit, the self-triggering circuit monitors the current of the DC-to-DC conversion circuit in real time and compares the current with the predetermined target current threshold. When the detected current is greater than the target current threshold, the on-off module 100 is driven to be turned on. When the detected current is smaller than or equal to the target current threshold, the on-off module 100 is driven to be turned off. This hardware-level triggering mechanism of the self-triggering circuit does not require logical operation of the external control unit 300, which effectively shortens the response time and is suitable for a scenario requiring microsecond-level or nanosecond-level rapid protection.

A DC-to-DC conversion device is provided according to an embodiment of the present disclosure. The DC-to-DC conversion device includes the DC-to-DC conversion circuit as described above.

In an embodiment, the DC-to-DC conversion device may further include a control unit 300 and a current sampling unit. The current sampling unit is disposed in the DC-to-DC conversion circuit. The control unit 300 is connected to the current sampling unit and is further connected to the on-off module 100 of the DC-to-DC conversion circuit.

The control unit 300 is configured to control, in response to the current of the DC-to-DC conversion circuit being greater than the target current threshold, the on-off module 100 to be turned on to shunt a current through the first sub-bridge arm of the DC-to-DC conversion circuit.

During an actual implementation, the current sampling unit may be a sampling resistor, a Hall sensor, a current transformer, or other devices capable of collecting the current on the DC-to-DC conversion circuit.

It can be understood that the current sampling unit may be disposed at different positions of the DC-to-DC conversion circuit for current sampling, and the different positions may correspond to different target current thresholds.

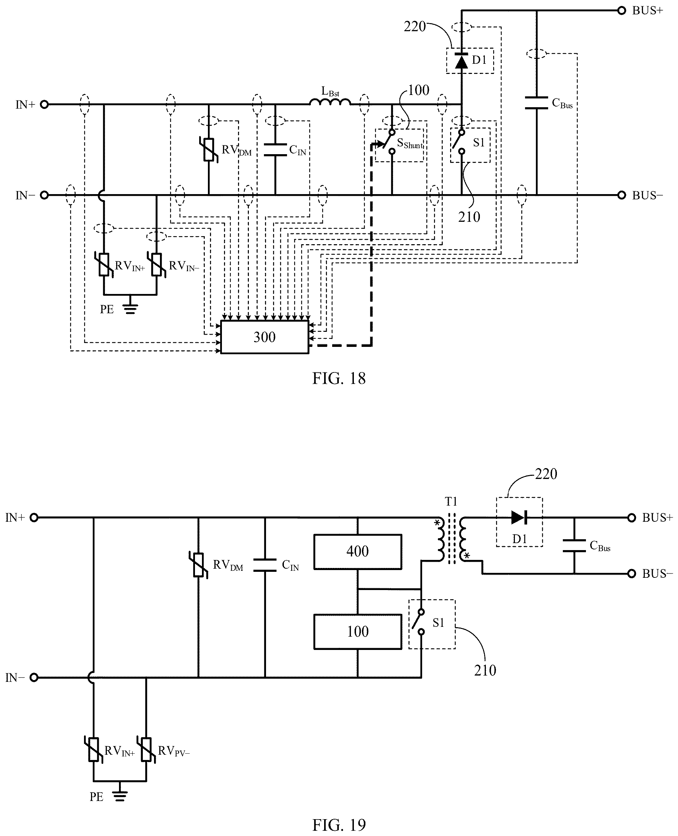

As shown in FIG. 18, the on-off unit 110 of the on-off module 100 is a bidirectional switch device S_{Shunt}, and may provide bidirectional shunt support for S1 on the first sub-bridge arm. A dashed circle in FIG. 18 is a sampling point where the current sampling unit may be disposed. Current sampling may be performed at one or more sampling points, and these current signals are transmitted to the control unit 300.

When the control unit 300 detects that a current at a predetermined position on the DC-to-DC conversion circuit is greater than the corresponding target current threshold, the on-off module 100 is controlled to be turned on to shunt the current through the first sub-bridge arm of the DC-to-DC conversion circuit.

In an embodiment, the DC-to-DC conversion device may be a non-isolated device.

In an embodiment, the DC-to-DC conversion device may be an isolated device.

For example, as shown in FIG. 19, the DC-to-DC conversion circuit of the DC-to-DC conversion device is a flyback circuit. Besides RV_{IN+}, RV_{DM}, RV_{IN-}, C_{IN}, and C_{Bus}, the DC-to-DC conversion circuit is further provided with T1 to achieve isolation, and the DC-to-DC conversion circuit may further be selectively equipped with an absorption circuit 400.

In this embodiment, the first sub-bridge arm is provided with S1, and the second sub-bridge arm is provided with D1. D1 allows for the one-way current flow and cooperates with S1 to realize the buck and boost conversion of the DC-to-DC conversion circuit.

S1 is connected in parallel with the on-off module 100. When the current of the DC-to-DC conversion circuit is greater than the predetermined target current threshold, the on-off module 100 is turned on to shunt the current through the first sub-bridge arm, which reduces the current flowing through S1, prevents the damage to the component such as S1 on the first sub-bridge arm, and improves the safety of the DC-to-DC conversion circuit.

The DC-to-DC conversion device is provided according to the embodiments of the present disclosure. The on-off module 100 is connected in parallel with the first sub-bridge arm with the active switch 210, and the on-off module 100 is not turned on during the normal commutation process. When the potential overcurrent risk or the overcurrent phenomenon occurs in the DC-to-DC conversion circuit, the on-off module 100 is turned on to shunt the current through the first sub-bridge arm, which can prevent the DC-to-DC conversion circuit from being subjected to the large current impact and improve the safety.

A power supply device is further provided according to the present disclosure.

In an embodiment, the power supply device includes the DC-to-DC conversion circuit as described above.

In an embodiment, the power supply device includes the DC-to-DC conversion device as described above.

The power supply device is configured to realize power conversion of a DC voltage and may be applied in fields such as a new energy power generation field and an energy storage field.

The power supply device is provided according to the embodiments of the present disclosure. The on-off module 100 is connected in parallel with the first sub-bridge arm with the active switch 210, and the on-off module 100 is not turned on during the normal commutation process. When the potential overcurrent risk or the overcurrent phenomenon occurs in the DC-to-DC conversion circuit, the on-off module 100 is turned on to shunt the current through the first sub-bridge arm, which can prevent the DC-to-DC conversion circuit from being subjected to the large current impact and improve the safety.

A control method for the DC-to-DC conversion circuit as described above is provided according to an embodiment of the present disclosure.

The control method for the DC-to-DC conversion circuit is provided according to the embodiments of the present disclosure. An execution subject of the control method for the DC-to-DC conversion circuit may be an electronic device or a functional module or a functional entity in the electronic device capable of implementing the control method for the DC-to-DC conversion circuit

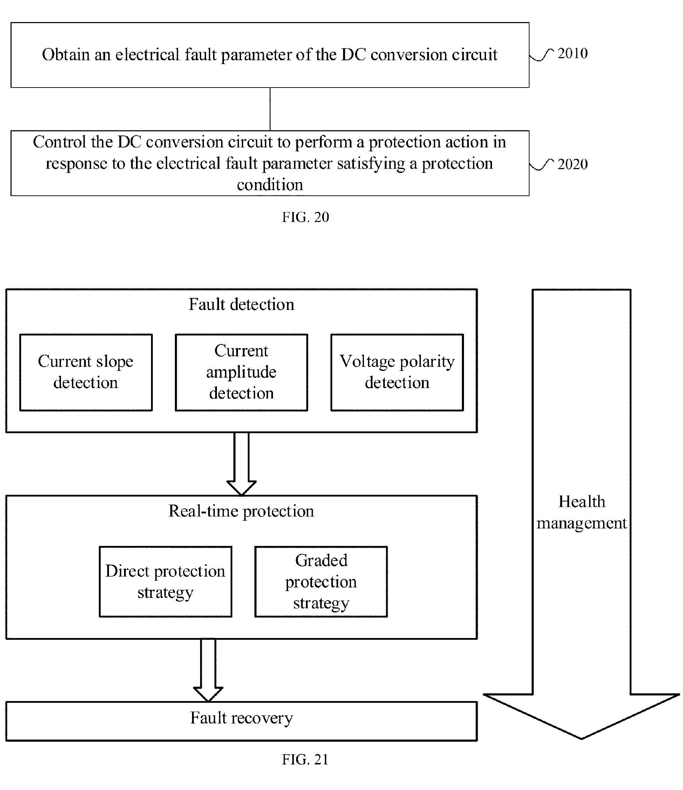

As shown in FIG. 20, the control method for the DC-to-DC conversion circuit includes following steps 2010 and 2020.

At step 2010, an electrical fault parameter of the DC-to-DC conversion circuit is obtained.

The electrical fault parameter includes at least one of a current parameter and a voltage parameter. The current parameter includes at least one of a current change rate and a current amplitude. The voltage parameter includes voltage polarity.

It can be understood that the current change rate refers to a rate at which the current changes over time, the current amplitude refers to a maximum value reachable by the current during the change process, and the voltage polarity refers to a positive direction and a negative direction of the voltage.

In this step, the electrical fault parameter such as the current change rate, the current amplitude, and the voltage polarity of the DC-to-DC conversion circuit is obtained to monitor whether a fault occurs in the DC-to-DC conversion circuit in real time.

At step 2020, the DC-to-DC conversion circuit is controlled to perform a protection action in response to the electrical fault parameter satisfying a protection condition.

In the DC-to-DC conversion circuit, a real-time electrical fault parameter satisfying a predetermined protection condition indicates that the DC-to-DC conversion circuit has a fault (such as a short circuit, grounding, or other abnormal conditions). The DC-to-DC conversion circuit may be controlled to execute the protection action according to a predetermined protection logic action to avoid further expansion of the fault.

For example, the current change rate of the DC-to-DC conversion circuit is obtained and compared with the predetermined protection condition. Pre-protection is realized by monitoring the current change rate, and the protection action is executed when an abnormally sharp increase in the current occurs and is suitable for a transient fault such as a lightning strike, with a response speed up to the microsecond level.

For another example, the current amplitude of the DC-to-DC conversion circuit is detected by a device such as a Hall sensor or a shunt resistor and is compared with the predetermined protection condition (a set current amplitude threshold) to determine whether an overcurrent occurs. The protection action is executed when an overcurrent occurs and is suitable for a steady-state fault such as a continuous overload or a reverse connection, with high detection accuracy.

For another example, whether a reverse connection fault occurs may be identified by monitoring the inputted voltage polarity, to cut off an abnormal circuit and prevent the device of the DC-to-DC conversion circuit from being damaged at the source.

During the actual implementation, the electrical fault parameter such as the current change rate, the current amplitude, and the voltage polarity may be used in combination to form a multi-data fusion collaborative protection system, which balance transient response and steady-state protection, and effectively improves the safety and stability of the operation of the DC-to-DC conversion circuit.

With the control method for the DC-to-DC conversion circuit provided according to the embodiments of the present disclosure, the electrical fault parameter such as the current change rate, the current amplitude, and the voltage polarity is detected, and in response to the electrical fault parameter satisfying the protection condition, the DC-to-DC conversion circuit is controlled to execute the protection action, which avoids the further expansion of the fault and effectively improves the safety and stability of the operation of the DC-to-DC conversion circuit.

It should be noted that when the DC-to-DC conversion circuit is controlled to execute the protection action for real-time protection, two strategies, i.e., a direct protection strategy and a graded protection strategy may be adopted.

First, for the direct protection strategy, in an embodiment, the controlling the DC-to-DC conversion circuit to perform the protection action includes: controlling the DC-to-DC conversion circuit to perform the protection action in response to the electrical fault parameter satisfying a predetermined fault protection condition.

The predetermined fault protection condition may be a single-threshold triggering condition satisfied by the electrical fault parameter such as the current change rate, the current amplitude, and the voltage polarity.

In this embodiment, the current change rate or the current amplitude is compared with a predetermined single threshold, or the voltage polarity is compared with a predetermined polarity state. When the predetermined fault protection condition is satisfied (the current change rate is greater than a predetermined threshold, the current amplitude is greater than a predetermined threshold, or the polarity state is reversed), the DC-to-DC conversion circuit is directly controlled to execute the protection action, for example, the on-off module 100 is controlled to be turned on, which can prevent the DC-to-DC conversion circuit from being subjected to the large current impact and improve the safety.

It can be understood that the direct protection strategy realizes rapid response through the single-threshold triggering, which is simple and reliable, and is suitable for a scenario sensitive to the cost and with a clear operating condition, such as a consumer electronic product.

Second, for the graded protection strategy, in an embodiment, the electrical fault parameter includes the current amplitude; and the controlling, based on the electrical fault parameter, the DC-to-DC conversion circuit to perform the protection action includes: controlling, based on a graded protection condition satisfied by the current amplitude, the DC-to-DC conversion circuit to perform a protection action corresponding to the graded protection condition.

The graded protection condition may include a plurality of sub-protection conditions.

In this embodiment, according to the sub-protection condition satisfied by the current amplitude, the DC-to-DC conversion circuit is controlled to execute the corresponding protection action, to realize hierarchical protection or phased protection of the DC-to-DC conversion circuit.

In an embodiment, said controlling, based on the graded protection condition satisfied by the current amplitude, the DC-to-DC conversion circuit to perform the protection action corresponding to the graded protection condition includes:
controlling the on-off module 100 to be turned on according to a predetermined dynamic shunt ratio in response to the current amplitude being greater than a first current threshold, where the dynamic shunt ratio represents a proportion of a current shunted from the first sub-bridge arm; and controlling the on-off module 100 to be turned off in response to the current amplitude being smaller than or equal to the first current threshold within a first predetermined time length; or
controlling the on-off module 100 to be turned on in response to the current amplitude being greater than a second current threshold; or
controlling a fuse of the DC-to-DC conversion circuit to cut off the DC-to-DC conversion circuit in response to the current amplitude being greater than a third current threshold.

The first current threshold is smaller than the second current threshold, and the second current threshold is smaller than the third current threshold.

It should be noted that the current amplitude being greater than the first current threshold corresponds to a first-level sub-protection condition, the current amplitude being greater than the second current threshold corresponds to a second-level sub-protection condition, and the current amplitude being greater than the third current threshold corresponds to a third-level sub-protection condition.

In this embodiment, the first-level sub-protection condition is an early warning shunting stage. When it is detected that the current amplitude is greater than the first current threshold, the on-off module 100 is triggered to be turned on for current shunting, while starting a timer. In the early warning shunting stage, a duty ratio modulation technology may be used to realize dynamic shunting ratio control, i.e., the on-off module 100 is controlled to be turned on according to a predetermined dynamic shunting ratio. The predetermined dynamic shunting ratio may be changed as needed, which can effectively reduce a fault current and avoid unnecessary system shutdown.

In the early warning shunting stage, a current change trend is monitored in real time. In response to the current amplitude being smaller than or equal to the first current threshold within the first predetermined time length, i.e., the current of the DC-to-DC conversion circuit being back to normal, the on-off module 100 is controlled to be turned off, the shunting is stopped, and the protection state is automatically released.

In this embodiment, the second-level sub-protection condition is a full shunting stage. When it is detected that the current amplitude is greater than the second current threshold, the on-off module 100 is controlled to be turned on and remains in an on state continuously to protect a power device in the DC-to-DC conversion circuit.

In this embodiment, the third-level sub-protection condition is a hardware fusing stage. When it is detected that the current amplitude is greater than the third current threshold, the fuse of the DC-to-DC conversion circuit is controlled to cut off the DC-to-DC conversion circuit. In the hardware fusing stage as a final safety barrier, the hardware fuse is triggered to completely cut off the circuit upon detecting an extreme fault.

It can be understood that a fuse executing an action in the hardware fusing stage is a dedicated protection device with a fast-fusing characteristic, which ensures circuit isolation within millisecond-level response time.

In this embodiment, through the three-level gradient graded protection strategy from the early warning shunting, the full shunting, to the fusing, a progressive fault treatment is realized. When different levels of overcurrent are detected, corresponding protection actions are executed, which reduces shutdown caused by a fault and balances the stability and reliability of the system, while realizing effective protection of the DC-to-DC conversion circuit.

It can be understood that after the protection action is triggered, the electrical fault parameter of the DC-to-DC conversion circuit may be continuously monitored to determine whether the fault is eliminated, and a normal operating state of the on-off module 100 in the DC-to-DC conversion circuit is gradually restored (the on-off module 100 is turned off).

In an embodiments, the method further includes, subsequent to the controlling the DC-to-DC conversion circuit to perform the protection action: controlling the on-off module 100 to be turned off according to a predetermined current change rate in response to determining that the electrical fault parameter of the DC-to-DC conversion circuit in N sampling periods does not satisfy the protection condition, where N is a positive integer greater than 1.

In this embodiment, in response to detecting that the electrical fault parameter of the DC-to-DC conversion circuit in the N sampling periods does not satisfy the protection condition, such as the current amplitude being lower than a safety threshold in the N sampling periods, a recovery sequence may be started. Parameter verification is performed to determine that an auxiliary parameter such as an input voltage and a temperature is within a normal range, and then a normal operating state of the on-off device is gradually restored according to a predetermined ramp rate (such as 5% of a rated current per millisecond).

It can be understood that after the DC-to-DC conversion circuit is controlled to execute the protection action, the electrical fault parameter of the DC-to-DC conversion circuit is continuously detected to determine that the fault is eliminated, and the normal operating state of the on-off module 100 in the DC-to-DC conversion circuit is gradually restored, to avoid other faults and efficiency losses caused by continuous shunting of the on-off module 100.

In an embodiment, the determining that the electrical fault parameter of the DC-to-DC conversion circuit in the N sampling periods does not satisfy the protection condition includes: determining that the current parameter of the DC-to-DC conversion circuit in the N sampling periods does not satisfy the corresponding protection condition and that a voltage parameter in at least one of the N sampling periods does not satisfy the corresponding protection condition.

In this embodiment, the normal operating state of the on-off module 100 in the DC-to-DC conversion circuit is gradually restored only in response to determining that the current parameter such as the current amplitude and the current change rate of the DC-to-DC conversion circuit in the N sampling periods does not satisfy the corresponding protection condition and determining that the voltage parameter in at least one sampling period does not satisfy the corresponding protection condition. Through a dual determination mechanism of the current parameter and the voltage parameter, false recovery is avoided.

It should be noted that a remaining life or health state of the DC-to-DC conversion circuit may be predicted to realize graded early warning, which provides a basis for preventive maintenance, and is beneficial to prolong a service life of the DC-to-DC conversion circuit.

In some embodiments, the control method for the DC-to-DC conversion circuit may further include: obtaining a cumulative number of conduction cycles, a cumulative shunt current, and a temperature stress parameter of the on-off module 100; performing remaining life prediction based on the cumulative number of conduction cycles, the cumulative shunt current, and the temperature stress parameter, and determining an aging degree of the on-off module 100; and performing graded early warning based on the aging degree of the on-off module 100, and outputting early warning information corresponding to a current aging degree of the on-off module 100.

In this embodiment, the cumulative number of conduction cycles, the cumulative shunt current, and the temperature stress parameter of the on-off module 100 are obtained, and the remaining life prediction is performed on the on-off module 100 based on these parameters. A device aging model may be established through these parameters to predict the aging degree of the on-off module 100, and the graded early warning may be performed according to the aging degree of the on-off module 100, and the corresponding early warning information is outputted.

For example, an aging degree threshold for graded early warning may include 70%, 85%, and 95%. When a predicted aging degree reaches 70%, early warning information for partial maintenance is outputted. When the predicted aging degree reaches 85%, early warning information for comprehensive maintenance is outputted. When the predicted aging degree reaches 95%, early warning information for timely component replacement is outputted.

As shown in FIG. 21, the protection of the DC-to-DC conversion circuit is divided into three stages: fault detection, real-time protection, and fault recovery. Through the electrical fault parameter such as a current slope (i.e., the current change rate), the current amplitude, and the voltage polarity, it is diagnosed whether a fault occurs in the DC-to-DC conversion circuit. When a fault occurs, the real-time protection may be realized by adopting a direct protection strategy and a graded protection strategy. After the protection action is executed, the electrical fault parameter is continuously monitored for fault recovery.

In the three stages of fault detection, real-time protection, and fault recovery, the cumulative number of conduction cycles, the cumulative shunt current, and the temperature stress parameter of the on-off module 100 are collected, the aging degree of the on-off module 100 is estimated, and the graded early warning is performed.

It should be noted that, terms herein "comprise", "include" or any other variations thereof are meant to cover non-exclusive including, such that the process, method, article or device including a series of elements do not only include those elements, but also include other elements that are not explicitly listed, or also include inherent elements of the process, method, article or device. In a case that there are no more restrictions, an element qualified by the statement "comprises a ..." does not exclude the presence of additional identical elements in the process, method, article or device that includes the said element. In addition, it should be noted that the scope of the methods and devices in the implementations of the present disclosure are not limited to performing the functions in the order shown or discussed, and may also include performing the functions in a substantially simultaneous manner or in a reverse order according to the involved functions. For example, the described methods may be performed in an order different from the described order, and various steps may be added, omitted, or combined. In addition, features described with reference to some examples may be combined in other examples.

In the description of the present disclosure, it needs to be understood that, orientation or position relationship indicated by terms such as "over" and "below" is based on the orientation or position relationship shown in the accompanying drawings, and is merely for the convenience of describing the present disclosure and simplifying the description, rather than indicating or implying that the associated device or element must have a specific orientation, or be constructed and operated in a specific orientation, and therefore cannot be understood as a limitation on the present disclosure.

In the description of the present disclosure, the features associated with "first" and "second" may include at least one of the features.

In the description of the present disclosure, "a plurality of" means two or more.

The embodiments of the present disclosure have been described above with reference to the accompanying drawings, but the present disclosure is not limited to the above-described specific embodiments, which are merely schematic rather than restrictive, and those skilled in the art can make many forms under the inspiration of the present disclosure without departing from the purpose of the present disclosure and the scope of protection of the claims, all of which fall within the protection of the present disclosure.

In the description of this specification, descriptions with reference to the terms "an embodiment", "some embodiments", "illustrative embodiments", "examples", "specific examples", "some examples", or the like means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Moreover, the particular features, structures, materials, or characteristics described here may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A direct-current to direct-current, DC-to-DC, conversion circuit, comprising:
a bridge arm connected to a direct-current, DC, input terminal of the DC-to-DC conversion circuit and comprising a first sub-bridge arm and a second sub-bridge arm, wherein the first sub-bridge arm comprises an active switch; and
an on-off module connected in parallel with the first sub-bridge arm, wherein the on-off module is turned on in response to a current of the DC-to-DC conversion circuit being greater than a target current threshold, to shunt a current through the first sub-bridge arm.

2. The DC-to-DC conversion circuit according to claim 1, wherein the on-off module comprises a unidirectional conduction device, a conduction direction of the unidirectional conduction device being opposite to a conduction direction of the active switch in the first sub-bridge arm when the active switch operates, preferably, the unidirectional conduction device is a diode; or
wherein the on-off module comprises a bidirectional switch device, preferably, the bidirectional switch device is a thyristor, an insulated gate bipolar transistor, a metal-oxide-semiconductor field-effect transistor, a high electron mobility transistor, a bipolar junction transistor, or a relay.

3. The DC-to-DC conversion circuit according to claim 1 or 2, wherein the on-off module comprises a shunt adjustment unit and an on-off unit that are connected in series, wherein the shunt adjustment unit is configured to adjust a shunt ratio of the on-off module, and wherein the on-off unit is configured to control on and off of the on-off module;
preferably, the shunt adjustment unit comprises at least one of an inductive component, a resistive component, and a capacitive component;
preferably, the inductive component of the shunt adjustment unit is magnetically coupled to an inductive component in a circuit between the DC input terminal and the bridge arm.

4. The DC-to-DC conversion circuit according to any one of claims 1 to 3, wherein a terminal of the on-off module is connected to the first sub-bridge arm, and another terminal of the on-off module is connected between components in a circuit between the DC input terminal and the bridge arm;
preferably, each of the components in the circuit between the DC input terminal and the bridge arm comprises at least one of an inductive component, a resistive component, and a capacitive component.

5. The DC-to-DC conversion circuit according to any one of claims 1 to 4, wherein the on-off module is connected in parallel with the active switch of the first sub-bridge arm in a one-to-one correspondence; or
wherein a plurality of active switches are connected in series to form a switch module, and the on-off module is connected in parallel with the switch module.

6. The DC-to-DC conversion circuit according to any one of claims 1 to 5, wherein at least two bridge arms are cascaded, and the first sub-bridge arm of one of the at least two bridge arms close to the DC input terminal is connected in parallel with the on-off module;
preferably, the first sub-bridge arm of one of the at least two bridge arms away from the DC input terminal is selectively connected in parallel with the on-off module.

7. The DC-to-DC conversion circuit according to any one of claims 1 to 6, wherein the on-off module comprises a self-triggering circuit, wherein the self-triggering circuit is configured to detect the current of the DC-to-DC conversion circuit, trigger the on-off module to be turned on in response to the current of the DC-to-DC conversion circuit being greater than the target current threshold, and trigger the on-off module to be turned off in response to the current of the DC-to-DC conversion circuit being smaller than or equal to the target current threshold.

8. A DC-to-DC conversion device, comprising:
the DC-to-DC conversion circuit according to any one of claims 1 to 7.

9. The DC-to-DC conversion device according to claim 8, further comprising:
a control unit; and
a current sampling unit disposed in the DC-to-DC conversion circuit, wherein:
the control unit is connected to the current sampling unit and the on-off module of the DC-to-DC conversion circuit; and
the control unit is configured to control, in response to the current of the DC-to-DC conversion circuit being greater than the target current threshold, the on-off module to be turned on to shunt a current through the first sub-bridge arm of the DC-to-DC conversion circuit.

10. A control method for the DC-to-DC conversion circuit according to any one of claims 1 to 7, comprising:
obtaining an electrical fault parameter of the DC-to-DC conversion circuit, wherein the electrical fault parameter comprises at least one of a current parameter and a voltage parameter, the current parameter comprising at least one of a current change rate and a current amplitude, and the voltage parameter comprising voltage polarity; and
controlling the DC-to-DC conversion circuit to perform a protection action in response to the electrical fault parameter satisfying a protection condition.

11. The control method for the DC-to-DC conversion circuit according to claim 10,
wherein said controlling the DC-to-DC conversion circuit to perform the protection action comprises: controlling the DC-to-DC conversion circuit to perform the protection action in response to the electrical fault parameter satisfying a predetermined fault protection condition; or
wherein the electrical fault parameter comprises the current amplitude; and said controlling the DC-to-DC conversion circuit to perform the protection action comprises: controlling, based on a graded protection condition satisfied by the current amplitude, the DC-to-DC conversion circuit to perform a protection action corresponding to the graded protection condition.

12. The control method for the DC-to-DC conversion circuit according to claim 11, wherein said controlling, based on the graded protection condition satisfied by the current amplitude, the DC-to-DC conversion circuit to perform the protection action corresponding to the graded protection condition comprises:
controlling the on-off module to be turned on according to a predetermined dynamic shunt ratio in response to the current amplitude being greater than a first current threshold, wherein the dynamic shunt ratio represents a proportion of a current shunted from the first sub-bridge arm; and controlling the on-off module to be turned off in response to the current amplitude being smaller than or equal to the first current threshold within a first predetermined time length; or
controlling the on-off module to be turned on in response to the current amplitude being greater than a second current threshold; or
controlling a fuse of the DC-to-DC conversion circuit to cut off the DC-to-DC conversion circuit in response to the current amplitude being greater than a third current threshold,
wherein the first current threshold is smaller than the second current threshold, and the second current threshold is smaller than the third current threshold.

13. The control method for the DC-to-DC conversion circuit according to any one of claims 10 to 12, wherein the method further comprises, subsequent to said controlling the DC-to-DC conversion circuit to perform the protection action:
controlling the on-off module to be turned off according to a predetermined current change rate in response to determining that the electrical fault parameter of the DC-to-DC conversion circuit in N sampling periods does not satisfy the protection condition, where N is a positive integer greater than 1.

14. The control method for the DC-to-DC conversion circuit according to claim 13, wherein said determining that the electrical fault parameter of the DC-to-DC conversion circuit in the N sampling periods does not satisfy the protection condition comprises:
determining that the current parameter of the DC-to-DC conversion circuit in the N sampling periods does not satisfy a corresponding protection condition and that the voltage parameter in at least one of the N sampling periods does not satisfy a corresponding protection condition.

15. The control method for the DC-to-DC conversion circuit according to any one of claims 10 to 14, further comprising:
obtaining a cumulative number of conduction cycles, a cumulative shunt current, and a temperature stress parameter of the on-off module;
performing remaining life prediction based on the cumulative number of conduction cycles, the cumulative shunt current, and the temperature stress parameter, and determining an aging degree of the on-off module; and
performing graded early warning based on the aging degree of the on-off module, and outputting early warning information corresponding to a current aging degree of the on-off module.
